# EUROPEAN PATENT APPLICATION

(11) **EP 1 298 841 A1**
(43) Date of publication of application: **02.04.2003**
(21) Application number: 01308155.9
(22) Date of filing: 26.09.2001
(51) Int. Cl.: H04L 12/24, H04L 12/26, H04L 29/08

(54) **Data retrieval system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

The interactions of communications terminals 1 with internet websites 9 or other data access systems are analysed by using a terminal 1 to access a test apparatus 5 carrying a simulation of a plurality of operative parameters of such data access systems. The operation of the terminal 1 is then tested when in communication with the test apparatus 5 under the said operating parameters. Access may be carried out through a number of different gateways 4 in order to record variations in such parameters caused by different gateway characteristics. Operational characteristics of the terminal 1 derived from such tests can then be stored 61. New websites 9 can then be tested using the stored operating characteristics 61 under a number of simulated situations.

## Description

This invention relates to data retrieval systems such as the "internet", and in particular systems for providing access to data from proprietary terminal equipment.

The Wireless Application Protocol (WAP) data standard for terminal devices provides the user of a suitably enabled device with the ability to browse appropriate Internet and Intranet sites that provide information using the various Mark-up Languages such as hypertext mark-up language (HTML) and Wireless Mark-up Language (WML), collectively referred to as xML (extensible mark-up language). The WAP Forum is an industry association that has developed the de-facto world standard for wireless information and telephony services on digital mobile phones and other wireless terminals. However, not all of the standards are mandatory and actual implementation of the standard is left to the discretion of the manufacturer. As a result, although all WAP products in the UK comply with standards set by the WAP Forum, each terminal device will handle and render a WAP web site differently. As an added complication, different versions of the browser firmware may also provide different support for the standard. As an illustration of this problem, Nokia browsers automatically insert a "Line Feed" after each hyperlink whereas Ericsson browsers do not. Many more examples can be illustrated of differences between browsers and, additionally, each new WAP product launched or new browser version is likely to introduce different problems.

It would be convenient to be able to identify terminal device incompatibility issues at an application level, when accessing content on a WAP portal site. While it is possible to carry out this task manually, it is desirable to minimise user involvement to make the most efficient use of available resources and to deliver more consistent and reliable results. Updates to handset software by manufactures to resolve identified incompatibilities are unlikely, given the wide range of websites accessible and their unregulated nature. However in many cases it will be possible to fine tune the xml content of the site in question to achieve the same result. It is therefore desirable to identify how each type of browser device co-operates with a website, in order to design the site content to accommodate these differences.

Many service providers use templates to ensure that content is matched to the device requesting the information. However, whenever a new terminal device or browser version is launched, the service provider must manually characterise it to ensure that it can display content correctly. Additionally, each time that the site changes, every terminal device and browser type should be tested again to ensure that the revised site remains compatible. In reality, this does not happen as the manpower required is prohibitive - the WAP sites are in a constant state of change. The reality is that there are many WAP site / WAP product permutations that render badly, or not at all, if the WAP product is used to access the site.

According to a first aspect of the invention, there is provided test apparatus for analysis of the operation of a communications terminal comprising means for establishing a communications connection between the terminal and the test apparatus, means for simulating a plurality of operative parameters of data access systems, means for testing the operation of the terminal when in communication with the test apparatus under the said operating parameters, and means for storing operational characteristics of one or more terminal types derived from such tests.

According to a second aspect of the invention, there is provided a method of analysis of the operation of a communications terminal, the method comprising the steps of establishing a communications connection between one or more terminals and the test apparatus, simulating a plurality of operative parameters of data access systems, testing the operation of the terminals when in communication with the test apparatus under the said operating parameters, and storing operational characteristics of the terminal or terminals derived from such tests.

A plurality of communications connections may be established over different media, the operational characteristics of the terminal being recorded when connected over each respective medium.

Storage means for data relating to the operational characteristics of one or more data access servers, may be provided, the stored data relating to the operational characteristics of the terminal types and the stored data relating to the operational characteristics of the application servers being used to simulate the accession of the application servers by each type of terminal. The data relating to the application servers may be obtained from the said application servers.

The application servers may be data access servers ("websites"), re-purposing tools, or any other application whose compatibility may require testing.

This invention the results of a single characterisation of a WAP product to be stored in a database for analysis in respect of a variety of websites, re-purposing tools or other applications.

Any WAP web site can then be analysed and the results stored in the same database. An automated comparison can then be made between the two sets of results and an accurate prediction can then be made as to how the WAP product will handle the WAP web site.

If a new or modified site is produced, it can be tested against all device types in the database. Similarly, if a new device type is produced, it can be added to the database and any existing websites tested against it.

The invention has considerable advantages. It is only necessary to characterise each device type once. Once a device type is characterised, checking against any WAP site is fast and accurate.

By storing the characteristics of websites, terminal devices and gateways centrally, it is possible to perform a rapid analysis of a large number of terminal device/gateway/website permutations under controlled conditions. Prototype systems can also be tested, or fault conditions replicated, without risking corruption of the real networks or databases.

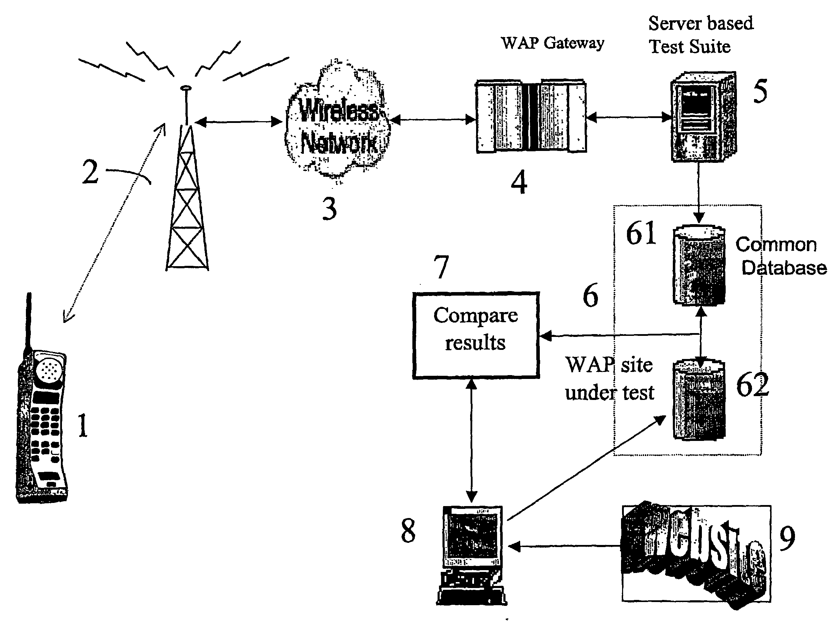

An embodiment will now be described with reference to the drawing, which is a schematic representation of the systems and devices which interact in this embodiment of the invention, illustrating the information flows between them.

The Figure shows a mobile handset 1 under test, connected by a radio link to a radio base station 2 and thus by the wireless system's fixed network 3 to a gateway server 4, through which can be accessed a server 5 operating a suite of test programs to identify the characteristics of the handset. The server is arranged to deliver the results of such tests to a database 61.

A store 62 is provided for storing the characteristics of existing websites. A processor allows comparison of this data with the handset data stored in the database 61. The results of such comparisons are delivered to a user terminal 8. The user terminal 8 has provision to access websites 9 in order to obtain and update the data stored in the store 62.

Three main processes which can be performed will now be described. Firstly, semi-manual characterisation of handsets can be carried out, with results automatically stored at addresses 61 in the database 6. Secondly, code (xml) used in a given website can be evaluated, with the results stored at other addresses 62 in the same database 6. Thirdly, it is possible to perform an automated comparison of the results stored in the respective addresses 61, 62 in the database, to identify handset/website compatibility issues.

The WAP product 1 under test is characterised against the WAP standard using a test suite 5 stored in the server 5 such as the "WAP Application Layer Development Test Suite", supplied by the "Open Group" consortium. This tool stores the results of each test in a database and is primarily used to verify that the "terminal device" complies with the WAP standard. No further data manipulation or comparison is done by the existing tool - the results are stored purely for archive purposes. However, by combining results, adding additional tests, adding extensions and then comparing with results stored at other addresses 62 under the control of the user terminal 8, the performance of any device against any xml source can be predicted.
The results of the interactions between the handset 1 and the test suite 5 may then be stored in a store 61 in the database 6. The system may test a the terminal 1 through a number of popular gateways 4. The implications of gateway performance and characteristics are considered in the determination of values for handset performance. It is necessary to include the gateway used for handset characterisation when analysing a WAP site, in order to allow for the influence of this variable.

Similarly, an operator can select individual WAP Web sites 9 to test, and attributes of such sites can be stored in a store 62 in the database 6.

To determine how an individual handset type will interact with an individual database it is then only necessary to select the relevant characterising data from the respective stores 61, 62 in the database 6, and run a comparison programme in the processor 7 to generate a prediction as to how the WAP product will display the tested WAP site.

The system is intended to test terminal devices with various combinations of browser type, browser version and device version from a variety of manufacturers. Unlike existing proprietary test tools, the invention allows the generation of results as seen by customers using actual rather than virtual handsets or other types of emulators. Website designers can therefore test changes to their sites before the amended site is made accessible to the public, using the database 61 to identify any problems of compatibility with existing terminal devices. Similarly, terminal designers can test prototype designs against a wide range of websites.

In a simpler mode a further use of the invention is to check the compatibility of any WAP website resource against any WAP terminal. The system may be used to test the "accuracy" of the code returned for any given browser, and to ensure that all links within the code actually exist, without making any sort of prediction about how each phone will respond to that code. In this process, during communication between the user terminal 8 to the resource site 9 under test, the header of the HTTP packet contains the exact header information that would be sent by the particular terminal's application e.g. a WAP browser application, hence simulating the applications communication information. The communication protocol used is as stated by the protocol scheme given in the URL/URI (uniform resource locator /identifier) of the resource - hence both standard and secure communication protocols are accommodated. The header information may be manually changed to simulate header information and/or communication protocol. The header information may be manually changed to simulate header information, or communication protocol, or both. When the requested XML resource is returned directly from the server to the terminal 8, the application parses the XML document to ensure that it conforms to the syntactical and semantic rules of the XML standard. The document is then optionally parsed to validate it against the Document Type Definition (DTD) as declared in the <!DOCTYPE...> declaration within the document, if one exists. Any document errors, including HTTP and TCP/IP communication errors, are recorded and displayed on the user terminal 8. The programme running on the terminal 8 then follows every URL/URI within the downloaded document and repeats the aforementioned tests. Considering the initial document as level 1, all URL/URI's accessed from that document as level 2 and all URL/URI's on the level 2 documents as considered level 3 etc., the user can specify the number of levels for which to repeat these.

This process allows content providers to verify that their content and all links are valid for all types of WAP devices.

Another use of the system is to verify the performance of HTML-to-wml re-purposing tools. These commercially available tools allow WAP browsers to view HTML web pages by converting the HTML code to WML. By accessing a database 9 comprising the output of the re-purposing tool it is possible to predict how each "terminal device" will interact and display the output of the re-purposing tool, thereby identifying errors in the re-purposing process.

## Claims

1. Test apparatus for analysis of the operation of a communications terminal comprising means for establishing a communications connection between the terminal and the test apparatus, means for simulating a plurality of operative parameters of data access systems, means for testing the operation of the terminal when in communication with the test apparatus under the said operating parameters, and means for storing operational characteristics of one or more terminal types derived from such tests.

2. Apparatus according to claim 1, wherein the means for establishing a communications connection comprises means for establishing a plurality of communications connections over different media, and means for recording the operational characteristics of the terminal when connected over each respective medium.

3. Apparatus according to claim 1 or claim 2, further comprising storage means for data relating to the operational characteristics of one or more application servers, and means for using the stored data relating to the operational characteristics of the terminal types and the stored data relating to the operational characteristics of the application servers to simulate the interaction of the servers with the or each terminal type.

4. Apparatus according to claim 3, further comprising means for obtaining the data relating to the application servers from the said application servers.

5. Apparatus according to claim 4, comprising means for accessing one or more data access servers.

6. Apparatus according to claim 4 or claim 5, comprising means for accessing one or more re-purposing tools.

7. A method of analysis of the operation of a communications terminal, the method comprising the steps of establishing a communications connection between one or more terminals and the test apparatus, simulating a plurality of operative parameters of data access systems, testing the operation of the terminals when in communication with the test apparatus under the said operating parameters, and storing operational characteristics of the terminal or terminals derived from such tests.

8. A method according to claim 7, wherein a plurality of communications connections are established over different media, and recording the operational characteristics of each terminal when connected over each respective medium.

9. A method according to claim 7 or claim 8, wherein data is stored relating to the operational characteristics of one or more application servers, and the interaction of the servers by each terminal is simulated using the stored data relating to the operational characteristics of the terminals and the stored data relating to the operational characteristics of the application servers

10. A method according to claim 9, wherein the data relating to the application servers is obtained from the said application access servers.

11. A method according to claim 10, wherein the application servers are data access servers.

12. A method according to claim 10, wherein the application servers are re-purposing tools.
